**Europäisches Patentamt**

**European Patent Office**

**Office européen des brevets**

(19)

(11) Veröffentlichungsnummer: **0 223 767**
**B1**

(12) # EUROPÄISCHE PATENTSCHRIFT

(45) Veröffentlichungstag der Patentschrift:
**12.10.88**

(51) Int. Cl.⁴: **F 02 B 33/04,** F 02 M 69/10

(21) Anmeldenummer: **86890299.0**

(22) Anmeldetag: **04.11.86**

(54) **Zweitakt-Brennkraftmaschine.**

(30) Priorität: **06.11.85 AT 3198/85**

(43) Veröffentlichungstag der Anmeldung:
**27.05.87 Patentblatt 87/22**

(45) Bekanntmachung des Hinweises auf die Patenterteilung:
**12.10.88 Patentblatt 88/41**

(84) Benannte Vertragsstaaten:
**CH DE FR IT LI NL**

(56) Entgegenhaltungen:
**DE-A-3 143 255**
**DE-C-209 671**
**DE-C-356 075**
**FR-A-2 143 161**
**GB-A-1 575**

(73) Patentinhaber: **Steyr- Daimler- Puch
Aktiengesellschaft, Kärntnerring 7, A-1010 Wien
(AT)**

(72) Erfinder: **Laimböck, Franz, Dipl.- Ing. Dr.,
Plüddemanngasse 73, A-8010 Graz (AT)**

LIBER, STOCKHOLM 1988

## Beschreibung

Die Erfindung betrifft eine Zweitakt-Hubkolbenbrennkraftmaschine mit Kurbelgehäusespülung, mit einem Kurbelgehäuse, mindestens einem darüber angeordneten Zylinder, einem im Zylinder gleitenden hohlen, topfförmigen Kolben und einer Kraftstoffeinspritzvorrichtung, deren Kraftstoffstrahl von der Kurbelgehäuseseite her zumindest teilweise in das Innere des hohlen Kolbens eintritt.

Es sind aus der Praxis bereits Zweitakt-Hubkolbenbrennkraftmaschinen bekannt, bei denen der Kraftstoffstrahl der Duse unmittelbar in den Brennraum gerichtet ist. Diese sogenannte Direkteinspritzung hat aber den Nachteil, daß insbesondere bei schnellaufenden Brennkraftmaschinen für den Einspritzvorgang und die Vermischung mit der Frischluft wenig Zeit zur Verfügung steht, so daß sich eine ungenügende Gemischaufbereitung ergibt, die ein unbefriedigendes Laufverhalten und erhöhte Emissionswerte mit sich bringt. Außerdem neigt die Düsenspitze, die meist unmittelbar im Brennraum liegt, zur Verkokung, was zu praktisch unüberwindbaren Schwierigkeiten führt.

Aus der GB-A-1 575 ist eine Zweitakt-Hubkolbenbrennkraftmaschine mit Kurbelgehäusespülung und einer Vorrichtung zur Kraftstoffeinspritzung bekannt, bei der der Kraftstoffstrahl von der Kurbelgehäuseseite her zumindest teilweise in das Innere eines hohlen Kolbens gerichtet ist.

Nachteilig dabei ist, daß keine Kühlung des Kolbenbodens erfolgt und daher dessen Dicke wesentlich größer als die Wandstärke des Kolbens ausgebildet sein muß, um ein Durchbrennen des Kolbenbodens zu verhindern, was vergrößerte Massenkräfte bewirkt und sich auf das Triebwerk ungünstig auswirkt. Außerdem erfordert die bekannte Maschine die Anordnung einer Umlenknase für das Gemisch an der dem Brennraum zugekehrten Seite des Kolbenbodens, wodurch die Massenkräfte noch zusätzlich erhöht werden.

Aus der DE-C-209 671 ist eine Zweitaktverbrennungskraftmaschine mit einem Hohlkolben bekannt, dessen Boden durch Kraftstoff gekühlt ist. Der Kolben ist doppelwandig ausgebildet und besitzt seitliche Öffnungen, die fallweise Einlaß- und Überströmöffnungen gegenüber liegen, sodaß der Gasstrom zweimal pro Umdrehung der Kurbelwelle durch den Hohlkolben strömt und dabei dessen Boden kühlt. Nachteilig dabei ist die komplizierte Ausbildung des Kolbens.

Demnach liegt der Erfindung die Aufgabe zugrunde, diese Nachteile zu vermeiden und eine Zweitakt-Brennkraftmaschine der eingangs geschilderten Art zu schaffen, die sich ohne wesentlichen technischen Aufwand durch besonders gute Gemischbildung auszeichnet und Vorteile hinsichtlich einer schwächeren Kolbenbemessung bietet.

Die Erfindung löst die gestellte Aufgabe dadurch, daß die Kraftstoffeinspritzvorrichtung eine Einspritzdüse umfaßt und daß wenigstens ein Teil des damit eingespritzten Kraftstoffstrahls auf den Kolbenboden auftrifft.

Es wird also eine Direkteinspritzung mit ihren Mängeln vermieden und eine wesentlich bessere Gemischaufbereitung dadurch erzielt, daß dafür ein Mehrfaches an Zeit zur Verfügung steht und wenigstens ein Teil des Kraftstoffstrahls auf den im Betrieb heißesten Teil, nämlich den Kolbenboden auftrifft. Diese Besprühung des Kolbenbodens hat aber auch den weiteren Vorteil, daß die Energie der Verdunstungswärme dem Kolbenboden entzogen, dieser also gekühlt wird und daher ohne die Gefahr eines etwaigen Durchbrennens wesentlich dünner als bisher ausgeführt werden kann. Der dünnere Kolbenboden bringt auch in für das Triebwerk günstiger Weise verringerte Massenkräfte mit sich. Durch das Einspritzen in das Innere des hohlen Kolbens wird selbstverständlich auch der Kolbenbolzen und das Pleuelauge mitgekühlt.

Die Einspritzdüse könnte seitlich der Kurbelwangen über den Kurbelwellen-Hauptlagern vorgesehen werden. Wesentlich günstiger ist es aber, wenn die Einspritzdüse in der Zylinderwand angeordnet und in der Kolbenwand im Düsenbereich in an sich bekannter Weise ein Fenster ausgespart ist, weil sich dann ein besserer Kühleffekt für den Kolbenboden und Kolbenbolzen samt Pleuelauge ergibt.

In weiterer Ausbildung der Erfindung ist in der einem Zylinderschlitz für einen Auslaßkanal diametral gegenüberliegenden Zylinderwand in dem bei der Kolbenbewegung vom Fenster überstrichenen Bereich wenigstens ein steil zum Zylinderkopf gerichteter Überströmkanal vorgesehen.

Bei schlitzgesteuerten Zweitakt-Brennkraftmaschinen im allgemeinen besteht die Gefahr, daß das aus dem Kurbelgehäuse zuströmende Gemisch zumindest zum Teil gewissermassen im Kurzschluß unmittelbar durch den Zylinderschlitz in den Auslaßkanal gelangt, ohne eine Bewegung im Sinne einer Umkehrspülung im Zylinder bzw. im Brennraum durchzuführen. Durch den erfindungsgemäßen, in der den Auslaßschlitz diametral gegenüberliegenden Zylinderwand steil zum Zylinderkopf gerichtet Überströmkanal wird dagegen eine Kurzschlußströmung des fetten Gemisches mit Sicherheit Vermieden und dem Zylinderschlitz in den Auslaß eine Zone mit sehr mageren Gemisch vorgelagert.

Zur Verbesserung dieses Effektes bzw. zur Vermeidung, daß fettes Gemisch in das Kurbelgehäuse eintritt, anstatt durch den Überströmkanal Unmittelbar in den Zylinderraum zu gelangen, ist das Kolbeninnere durch eine Querwand mit Durchtrittsöffnung für das Pleuel gegen das Kurbelgehäuse abgetrennt.

Bei üblichen Zweitakt-Brennkraftmaschinen ist der Frischlufteintrittsschlitz in das Kurbelgehäuse

meist in der dem Auslaßschlitz diametral gegenüberliegenden Zylinderwand vorgesehen. Da nun aber erfindungsgemäß in dieser Wand der Überströmkanal ausgespart bzw. die Düse eingebaut ist, wird nunmehr der Frischlufteintrittsschlitz in das Kurbelgehäuse an der Seite des Zylinderschlitzes in den Auslaßkanal unter diesem angeordnet.

Bei sehr schnellaufenden Zweitakt-Brennkraftmaschinen kann es vorkommen, daß die für den Einspritzvorgang zur Verfügung stehende Zeit wegen der Trägheit der Düse von dieser nicht eingehalten bzw. von dieser Überschritten wird. Um diesen Mangel zu beseitigen, ist erfindungsgemäß schließlich eine zweite mit ihrem Kraftstoffstrahl in den gleichen Bereich wie die erste Düse gerichtete und gegenüber dieser mit 360° Kurbelwinkel Phasenverschiebung wechselweise wirksame Düse vorgesehen.

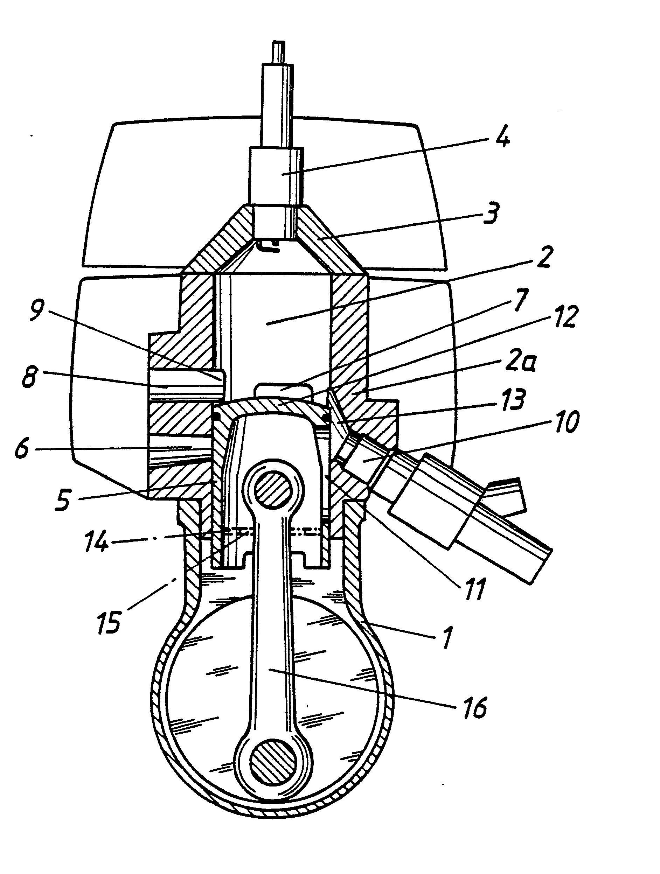

Die Zeichnung zeigt als Ausführungsbeispiel eine erfindungsgemäße Zweitakt-Brennkraftmaschine mit Kurbelgehäusespülung in vereinfachter Schnittdarstellung.

Die Zweitakt-Brennkraftmaschine weist ein Kurbelgehäuse 1, einen Zylinder 2 und einen ZylinderKopf 3 mit Zündkerze 4 auf. Die beim Aufwärtshub des hohlen Kolbens 5 durch den Eintrittsschlitz 6 angesaugte Frischluft wird im Kurbelgehäuse 1 vorverdichtet, gelangt durch den Überströmkanal 7 in den Brennraum, der mit einem in den Auslaßkanal 3 fahrenden Schlitz 9 versehen ist. In der dem Zylinderschlitz 9 diametral gegenüberliegenden Zylinderwand 2a ist eine Düse 10 zur Kraftstoffeinspritzung eingebaut, wobei diese Düse 10 so gerichtet ist, daß wenigstens ein Teil des Kraftstoffstrahles durch ein Fenster 11 in der Wand des Kolbens 5 auf den Kolbenboden 12 trifft. In der dem Zylinderschlitz 9 diametral gegenüberliegenden Zylinderwand 2a ist außerdem in dem bei der Kolbenbewegung vom Fenster 11 überstrichenen Bereich ein steil zum Zylinderkopf 3 gerichteter Überströmkanal 13 ausgespart. Das Kolbeninnere kann durch eine strichpunktiert angedeutete Querwand 14 mit Durchtrittsöffnung 15 für das Pleuel 16 gegen das Kurbelgehäuse 1 abgeteilt sein.

**Patentansprüche**

1. Zweitakt-Hubkolbenbrennkraftmaschine mit Kurbelgehäusespülung, mit einem Kurbelgehäuse (1), mindestens einem darüber angeordneten Zylinder (2), einem im Zylinder (2) gleitenden hohlen, topfförmigen Kolben (5) und einer Kraftstoffeinspritzvorrichtung, deren Kraftstoffstrahl von der Kurbelgehäuseseite her zumindest teilweise in das Innere des hohlen Kolbens (5) eintritt, dadurch gekennzeichnet, daß die Kraftstoffeinspritzvorrichtung eine Einspritzdüse (10) umfaßt und daß wenigstens ein Teil des damit eingespritzten Kraftstoffstrahls auf den Kolbenboden (12) auftrifft.

2. Brennkraftmaschine nach Anspruch 1, dadurch gekennzeichnet, daß die Einspritzdüse (10) in der Zylinderwand angeordnet und in der Kolbenwand im Düsenbereich in an sich bekannter Weise ein Fenster (11) ausgespart ist.

3. Brennkraftmaschine nach Anspruch 2, dadurch gekennzeichnet, daß in der einem Zylinderschlitz (9) für einen Auslaßkanal (8) diametral gegenüberliegenden Zylinderwand (2a) in dem bei der Kolbenbewegung vom Fenster (11) überstrichenen Bereich wenigstens ein steil zum Zylinderkopf (3) gerichteter Überströmkanal (13) vorgesehen ist.

4. Brennkraftmaschine nach den Ansprüchen 1 bis 3, dadurch gekennzeichnet, daß das Kolbeninnere durch eine Querwand (14) mit einer Durchtrittsöffnung (15) für ein Pleuel (16) gegen das Kurbelgehäuse (1) abgetrennt ist.

5. Brennkraftmaschinen nach Anspruch 3, dadurch gekennzeichnet, daß an der Seite des Zylinderschlitzes (9) für den Auslaßkanal (8) unter diesem ein Frischlufteintritts-schlitz (6) in das Kurbelgehäuse (1) angeordnet ist.

6. Brennkraftmaschine nach einem der Ansprüche 1 bis 5, dadurch gekennzeichnet, daß eine zweite mit ihrem Kraftstoffstrahl in den gleichen Bereich wie die erste Einspritzdüse (10) gerichtete und gegenüber dieser mit 360° Kurbelwinkel Phasenverschiebung wechselweise wirksame Einspritzdüse vorgesehen ist.

**Claims**

1. A two-stroke-cycle reciprocating internal combustion engine with crankcase scavenging, comprising a crankcase (1), at least one cylinder (2) disposed over the crankcase, a hollow, pot-shaped piston (5), which is slidable in the cylinder (2), and fuel injecting means for discharging a fuel jet which enters from the crankcase side at least in part into the interior of the hollow piston (5), characterized in that the fuel injecting means comprise an injection nozzle (10), and that at least part of the fuel jet injected by said nozzle impinges on the piston head (12).

2. An internal combustion engine according to claim 1, characterized in that the injection nozzle (10) is disposed in the cylinder wall and a window (11) is formed in the piston wall adjacent to the nozzle in a manner known per se.

3. An internal combustion engine according to claim 2, characterized in that at least one transfer port (13), which is steeply directed to the cylinder head (3), is provided in that cylinder wall (2a) which is diametrically opposite to a cylinder port (9) for an exhaust passage (8) in that region of said cylinder wall which is swept by the window (11) during the motion of the piston.

4. An internal combustion engine according to claims 1 to 3, characterized in that the interior of the piston is separated from the crankcase (1) by a transverse partition (14), which has an opening (15) which constitutes a passage for a connecting rod (16).

5. Internal combustion engine according to claim 3, characterized in that a port (6) for admitting fresh air to the crankcase (1) is provided on the same side as and below the cylinder port (9) for the exhaust passage (8).

6. An internal combustion engine according to any of claims 1 to 5, characterized in that a second injection nozzle is provided, which directs a fuel jet into the same region as the first injection nozzle (10) and is operated in alternation with the first injection nozzle and with a phase displacement corresponding to a crank angle of 360° relative to the first injection nozzle.

rapport à ce premier injecteur, entre en action avec un déphasage de 360° de l'angle de vilebrequin.

**Revendications**

1. Moteur à deux temps à combustion interne avec balayage du carter de vilebrequin, comprenant un carter du vilebrequin (1), au moins un cylindre (2) disposé au-dessus de ce carter, un piston (5) creux analogue à un pot coulissant dans le cylindre (2) et un dispositif d'injection de carburant dont le jet de carburant injecté venant du côté du carter du vilebrequin (1) entre au moins partiellement à l'intérieur du piston creux (5), caractérisé en ce que le dispositif d'injection du carburant comprend un injecteur (10) et qu'au moins une partie du jet de carburant ainsi injecté frappe le fond (12) du piston.

2. Moteur à combustion interne selon la revendication 1, caractérisé en ce que l'injecteur (10) est disposé dans la paroi du cylindre et une fenêtre (11) est ménagée, de façon connue en soi, dans la paroi du piston dans la zone de l'injecteur.

3. Moteur à combustion interne selon la revendication 2, caractérisé en ce qu'il est prévu dans une paroi du cylindre (2a) diamétralement opposée à une lumière du cylindre (9) pour un canal d'échappement (8), dans la zone balayée par la fenêtre (11) pendant le mouvement du piston, au moins un canal d'admission de carburant (13) dirigé avec une forte pente vers la culasse (3).

4. Moteur à combustion interne selon les revendications 1 à 3, caractérisé en ce que l'intérieur du piston est séparé du carter du vilebrequin (1) par une cloison transversale (14) ayant un orifice de passage (15) pour une bielle (16).

5. Moteur à combustion interne selon la revendication 3, caractérisé en ce qu'une lumière d'entrée de l'air frais (6) dans le carter du vilebrequin (1) est disposée du même côté que la lumière du cylindre (9) pour le canal d'échappement (8), sous cette même lumière.

6. Moteur à combustion interne selon une quelconque des revendications 1 à 5, caractérisé en ce qu'il est prévu un deuxième injecteur dont le jet de carburant est dirigé sur la même zone que celle du premier injecteur (10) et qui, par